# EUROPÄISCHE PATENTSCHRIFT

(11) **EP 3 007 998 B1**
(45) Veröffentlichungstag und Bekanntmachung des Hinweises auf die Patenterteilung: **07.08.2019**
(21) Anmeldenummer: 14730507.2
(22) Anmeldetag: 12.06.2014
(51) Int. Cl.: B65G 29/00, B67C 3/24, B67C 7/00, B65G 47/86

(54) **BEHÄLTERTRANSPORTVORRICHTUNG**
CONTAINER CONVEYOR DEVICE
DISPOSITIF DE TRANSPORT DE RÉCIPIENTS

(30) Priorität: 12.06.2013 DE 102013106084
(43) Veröffentlichungstag der Anmeldung: 20.04.2016
(60) Teilanmeldung: 19170189.5
(73) Patentinhaber: KHS GmbH, 44143 Dortmund (DE)
(72) Erfinder: FAHLDIECK, Andreas, 55743 Idar-Oberstein (DE); KRIEG, Andreas, 67596 Dittelsheim-Hessloch (DE); REIMANN, Thomas, 55452 Guldental (DE)
(86) Internationale Anmeldenummer: PCT/EP2014/062228
(87) Internationale Veröffentlichungsnummer: WO 2014/198824

(56) Entgegenhaltungen:
- EP-A1- 2 684 805
- DE-T2- 60 114 777

## Beschreibung

Die Erfindung bezieht sich auf Behältertransportvorrichtungen gemäß Oberbegriff Patentanspruch 1.

In der Getränkeindustrie sind Behälterbehandlungsmaschinen unterschiedlichster Art und für unterschiedlichste Zwecke bekannt. Üblicherweise sind diese Maschinen in Rundläuferbauweise, d.h. als Maschinen umlaufender Bauart ausgeführt, und zwar mit einem um eine vertikale Maschinenachse umlaufend antreibbaren Rotor. Am Umfang des Rotors sind Behandlungspositionen mit Behälterträgern gebildet, die vielfach für eine hängende Halterung der Behälter ausgebildet sind, insbesondere auch zum Verarbeiten von Behältern in Form von Kunststoffflaschen (PET-Flaschen). Werden derartige Behälterbehandlungsmaschinen mit größeren Leistungen (Anzahl der behandelten Behälter je Zeiteinheit) betrieben, so treten am Rotor, aber auch an Transportsternen eines Behältereinlaufs und/oder eines Behälterauslaufs erhebliche Fliehkräfte auf, die unmittelbar auf die Behälter einwirken. Dies führt bei einer hängenden Halterung der Behälter dazu, dass diese mit ihrem Behälterboden bezogen auf die Maschinenachse radial nach außen ausweichen, sich also schräg stellen, was eine ordnungsgemäße Behandlung der Behälter zumindest stark beeinträchtigt. Besonders nachteilig ist diese durch Fliehkräfte verursachte Schrägstellung der Behälter bei Ausbildung der Behandlungsmaschine als Verschließmaschine oder als Füller, aber auch als Einlauf- und/oder Auslaufstern. Bei Verschließmaschinen führt die Schrägstellung der Behälter u.a. zu schräg sitzenden Verschlüssen, bei Füllmaschinen zu einer unsauberen Füllung und zu Verschmutzungen durch verspritztes Füllgut. Bei Einlauf- und/oder Auslaufsternen führt die Schrägstellung u.a. zu einer nicht ordnungsgemäßen Übergabe der Behälter, zu klemmenden Behältern, zu einem Behälterbruch und/oder Behälterstau usw. EP 2 684 805 A1 ist Teil der Zwischenliteratur gemäß Artikel 54(3) EPÜ.

Um die durch Fliehkräfte bedingte Schrägstellung der Behälter zu vermeiden, wurde bereits in DE 601 14 777 T2 entsprechend dem Oberbegriff des Anspruchs 1 vorgeschlagen, unterhalb der Behälterträger eine äußere mit dem Rotor nicht mit bewegte Behälterabstützfläche vorzusehen, die die Behälter bezogen auf die Maschinenachse außen an ihrer Behältermantel- oder -außenfläche am Behälterboden abstützt und einen kegelringförmigen, die Maschinenachse umschließenden Verlauf derart aufweist, dass der radiale Abstand der Behälterabstützfläche von der Maschinenachse mit zunehmenden vertikalen Abstand von den Behälterträgern abnimmt. Zur Anpassung an unterschiedliche Behältergrößen bzw. Behälterbodendurchmesser ist die äußere Abstützfläche bzw. eine diese Abstützfläche bildende ringartige Behälterführung in Richtung der Maschinenachse höhenverstellbar. Um die an den Behälterträgern des Rotors hängend gehaltenen Behälter auch in Umfangsrichtung des Rotors abzustützen, sind am Rotor oberhalb der äußeren Behälterabstützfläche Behälteraufnahmen vorgesehen, die die Behälter jeweils mit einem Teil ihres Umfangs aufnehmen. Die Behälteraufnahmen bilden zusammen mit der äußeren Behälterabstützfläche eine Behälterabstützeinrichtung. Nachteilig hierbei ist, dass bei Verarbeitung von Behältern unterschiedlicher Größe bzw. mit unterschiedlichem Behälterdurchmesser die Behälteraufnahmen am Rotor in aufwändiger Weise ausgetauscht werden müssen.

Aufgabe der Erfindung ist es, eine Behältertransportvorrichtung aufzuzeigen, die die vorgenannten Nachteile vermeidet und bei der in einfacher Weise ausschließlich durch eine Höhenverstellung eine Anpassung an Behälter unterschiedlicher Größe bzw. mit unterschiedlichen Behälterdurchmessern möglich ist.

Zur Lösung dieser Aufgabe ist eine Behältertransportvorrichtung entsprechend dem Patentanspruch 1 ausgebildet.

Die erfindungsgemäße Behältertransportvorrichtung ist bevorzugt Bestandteil einer Behälterbehandlungsmaschine und dabei insbesondere derjenige Bestandteil der Behälterbehandlungsmaschine, auf dem die Behandlung der Behälter erfolgt bzw. die Behandlungspositionen gebildet sind.

"Höhenverstellung" bedeutet im Sinne der Erfindung eine Verstellung, bei der die Verstellbewegung, zumindest aber die Hauptkomponente der Verstellbewegung in Richtung der Maschinenachse erfolgt.

"Behälter" sind im Sinne der Erfindung insbesondere Flaschen, aber auch andere Behälter, die zum Abfüllen von pulverförmigen, granulatartigen, flüssigen oder viskosen Produkten geeignet und für eine hängende Halterung an Behälterträgern eines umlaufenden Transportelementes ausgebildet sind sowie z.B. aus Metall, Glas und/oder Kunststoff bestehen.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

In Weiterbildung der Erfindung ist die Behältertransportvorrichtung beispielsweise so ausgeführt,
dass die wenigstens eine innere Behälterabstützfläche aus einer Vielzahl von inneren Abstützflächen gebildet ist,
und/oder dass jedem Behälterträger eine eigene Behältertasche zugeordnet ist,
und/oder
dass die Behälterabstützflächen der Behältertaschen kegel- oder kegelstumpfflächenartig ausgebildet sind,
und/oder
dass die äußere Behälterführung über wenigstens eine Verstelleinrichtung höhenverstellbar ist,
und/oder
dass die wenigstens eine Verstelleinrichtung ein Spindelantrieb ist,
wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: in vereinfachter Darstellung und in Draufsicht eine Behälterbehandlungsmaschine mit einer Behältertransportvorrichtung gemäß der Erfindung;
- Fig. 2: in Einzeldarstellung ein umlaufendes Transportelement (Rotor) der Behandlungsmaschine der Figur 1 in einem Betriebszustand für die Behandlung großvolumiger Behälter;
- Fig. 3: in vereinfachter Einzeldarstellung eine der Behandlungspositionen der Behälterbehandlungsmaschine der Figur 1 in dem Betriebszustand zur Behandlung großvolumiger Behälter;
- Fig. 4: und 5 Darstellung wie Figuren 2 und 3 bei einem Betriebszustand zur Behandlung kleinvolumiger Behälter;
- Fig. 6: in Einzeldarstellung eine Behälterabstützeinrichtung der Behälterbehandlungsmaschine der Figur 1;
- Fig. 7: in perspektivischer Teildarstellung den umlaufenden Rotor einer Behälterbehandlungsmaschine im Bereich eines von einem Transportstern gebildeten Behältereinlaufs oder Behälterauslaufs, in Blickrichtung von oben, welches nicht Teil der Erfindung ist.
- Fig. 8: in perspektivischer Teildarstellung den Bereich der Behälterbehandlungsmaschine der Figur 7, in Blickrichtung von unten;
- Fig. 9: in Teildarstellung eine Unteransicht auf den Bereich der Behälterbehandlungsmaschine der Figur 7.

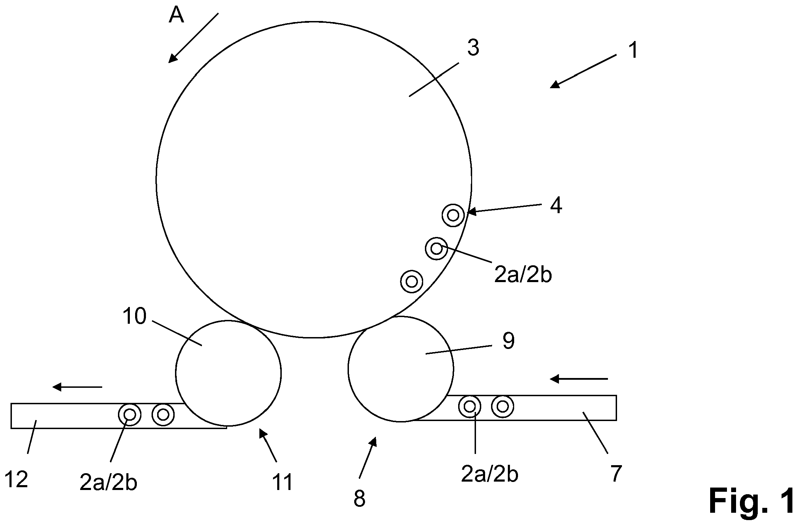

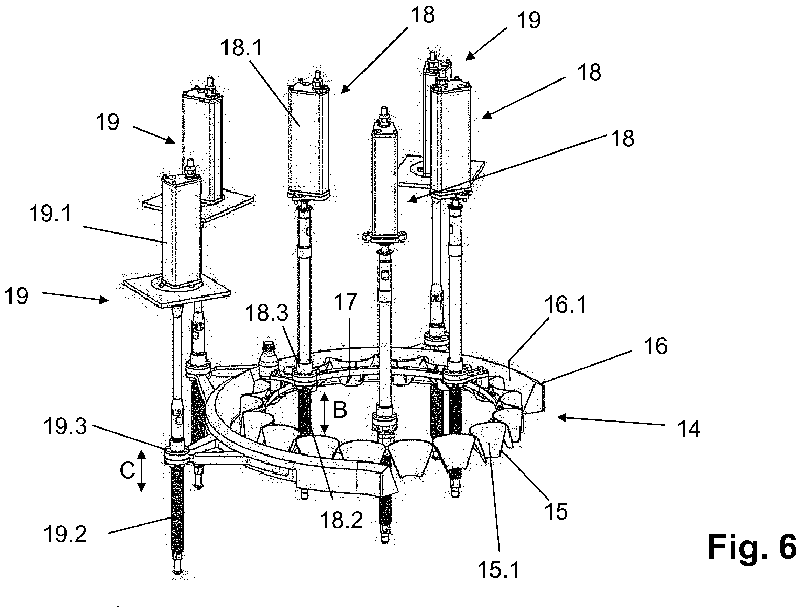

Die in den Figuren 1 - 6 allgemein mit 1 bezeichnete Behälterbehandlungsmaschine ist zur Verarbeitung von Behältern, beispielsweise in Form von Flaschen, insbesondere solchen aus Kunststoff (PET-Flaschen) mit unterschiedlicher Größe und mit unterschiedlichem Flaschen- oder Behälterdurchmesser ausgebildet, beispielsweise zur Verarbeitung von den großvolumigen mit 2a bezeichneten Behältern und von kleinvolumigen mit 2b bezeichneten Behältern. Mit 2a sind die mit der Behandlungsmaschine 1 noch zu verarbeitenden Behälter mit dem größten Volumen sowie Behälterdurchmesser und mit b2 entsprechend die mit der Behandlungsmaschine 1 noch zu verarbeitenden Behälter mit dem kleinsten Volumen sowie Behälterdurchmesser bezeichnet. An jede Behältergröße zwischen diesen Extremen ist die Behandlungsmaschine 1 anpassbar.

Die Behälterbehandlungsmaschine 1, die beispielsweise als Füllmaschine zum Füllen der Behälter 2a, 2b oder aber als Verschließmaschine zum Verschließen der gefüllten Behälter 2a, 2b dient, umfasst u.a. einen um eine vertikalen Maschinenachse MA umlaufend antreibbaren Rotor 3, an dessen Umfang in gleichmäßigen Winkelabständen um die Maschinenachse versetzt Behandlungspositionen 4 gebildet sind. Letztere umfassen jeweils einen Behandlungskopf 5, der an die jeweilige Art der Behandlung angepasst ist, sowie einen Behälterträger 6 zur hängenden Halterung des jeweiligen Behälters 2a bzw. 2b an einem Behälterflansch unterhalb der Behältermündung.

Bei der dargestellten Ausführungsform umfasst der Rotor 3 u.a. ein oberes kreisringförmiges Rotorelement 3.1, an welchem insbesondere die Behälterträger 6 vorgesehen sind, sowie ein unteres kreisscheibenförmiges Rotorelement 3.2, welches an einer mit dem Rotor 3 umlaufend angetriebenen Rotorsäule 3.3 vorgesehen ist. Über eine Vielzahl von Führungs- und/oder Haltestangen 3.4 ist das Rotorelement 3.1 mit den übrigen Elementen des Rotors 3 verbunden. Die Behandlungsköpfe 5 sind beispielsweise an einem weiteren, nicht dargestellten Rotorelement vorgesehen.

Die zu behandelnden Behälter 2a, 2b werden den Behandlungspositionen 4 über einen äußeren Transporteur 7 und über einen Behältereinlauf 8 zugeführt, der u.a. einen Transportstern 9 aufweist. Die behandelten Behälter 2a, 2b werden den Behandlungspositionen 4 an einem einen Transportstern 10 aufweisenden Behälterauslauf 11 entnommen und an einen äußeren Transporteur 12 weitergeleitet. Die beiden Transportsterne 9 und 10 sind jeweils synchron mit dem Rotor 3 um vertikale Achsen umlaufen angetrieben.

Die Behandlung der Behälter 2a, 2b erfolgt auf dem Winkelbereich der Drehbewegung (Pfeil A) des Rotors 3 zwischen den Behältereinlauf 7 und dem Behälterauslauf 11. Für den sicheren Halt der Behälter 2a, 2b an den Behälterträger 6 ist eine äußere Führung 13 vorgesehen, gegen die die Behälter 2a, 2b im Bereich ihres unterhalb der Behältermündung gebildeten Behälterflansches (Neckring) anliegen.

Um zu gewährleisten, dass die Behälter 2a, 2b auch bei einer hohen Leistung der Behälterbehandlungsmaschine 1, d.h. bei mit hoher Geschwindigkeit umlaufendem Rotor 3 und trotz der dabei auf die Behälter 2a, 2b ausgeübten Zentrifugal- oder Fliehkräfte mit ihrer Behälterachse in der erforderlichen Weise parallel oder zumindest im Wesentlichen parallel zur Maschinenachse MA und dabei auch achsgleich oder zumindest im Wesentlichen achsgleich mit der Achse BA des jeweiligen Behandlungskopfes 5 angeordnet sind, weist die Behälterbehandlungsmaschine 1 unterhalb der Behälterträger 6 eine Behälterabstützeinrichtung 14 auf. Diese besteht aus einer Vielzahl von konischen Behältertaschen 15 und einer äußeren schrägen oder kegelringförmigen Behälterführung 16 für die Außen- oder Mantelfläche jedes Behälters 2a, 2b im Bereich des Behälterbodens 2a.1, 2b.1. Jeder Behandlungsposition 4 ist eine eigene Behältertasche 15 zugeordnet. Die Behältertaschen 15 sind an einem gemeinsamen, die Maschinenachse MA konzentrisch umschließenden Träger oder Tragring 17 vorgesehen, und zwar bei der dargestellten Ausführungsform derart, dass sich die Behältertaschen 15 an der bezogen auf die Maschinenachse MA radial außenliegenden Seite des Tragringes 17 befinden. Weiterhin sind die Behältertaschen 15 jeweils bezogen auf die Maschinenachse MA radial außen liegend offen. Jede Behältertasche 15 bildet eine Behälterabstützfläche 15.1, gegen die der jeweilige Behälter 2a, 2b mit seiner Außen- oder Mantelfläche unmittelbar am Behälterboden 2a.1 bzw. 2b.1 anliegt. Der Tragring 17 ist Bestandteil des Rotors 3, sodass die Behältertaschen 15 mit dem Rotor 3 und mit den dortigen Behandlungspositionen 4 um die Maschinenachse MA umlaufen.

Die Behältertaschen 15 sind so ausgeführt, dass sie sich jeweils in Umfangsrichtung des Rotors 3 mit zunehmendem vertikalem Abstand von dem Behandlungskopf 5 bzw. Behälterträger 6 verengen. Weiterhin sind die Behältertaschen 15 so ausgebildet, dass ihre Behälterabstützfläche 15.1 mit zunehmendem vertikalem Abstand von dem Behandlungskopf 5 bzw. Behälterträger 6 einen zunehmenden radialen Abstand von der Maschinenachse MA aufweisen. Speziell sind die Behälterabstützflächen 15.1 der bei der dargestellten Ausführungsform so geformt, dass sie Teil einer Mantelfläche eines achsgleich mit der Achse BA angeordneten und sich mit zunehmenden Abstand vom jeweiligen Behandlungskopf 5 verjüngenden Kegels sind und dessen obere Kegelfläche etwa gleich dem Bodendurchmesser der Behälter 2a ist und dessen untere Kegelfläche etwa gleich dem Bodendurchmesser der Behälter 2b ist.

Die äußere Behälterführung 16 ist kegelringartig ausgeführt und bildet eine Behälterabstützfläche 16.1 gegen die die Behälter 2a, 2b ebenfalls mit ihrer Außenfläche am Behälterboden 2a.1, 2b.1 anliegen. Mit zunehmendem vertikalem Abstand von den Behandlungsköpfen 5 weist die Behälterabschnittsfläche 16.1 einen abnehmenden radialen Abstand von der Maschinenachse MA auf. Die mit dem Rotor 3 nicht umlaufende, d.h. an einem Maschinengestell der Behandlungsmaschine 1 vorgesehene äußere Behälterführung 16 erstreckt sich über den Winkelbereich der Drehbewegung des Rotors 3 zwischen dem Behältereinlauf 7 und dem Behälterauslauf 11.

Die Behältertaschen 15 sind weiterhin so ausgebildet, dass der jeweilige Behälter 2a, 2b lediglich mit einem Teilbereich seines Umfangs, d.h. beispielsweise maximal mit seinem halben Umfang in der jeweiligen Behältertasche 15 aufgenommen ist. Die Zuordnung der äußeren Behälterführung 16 zu den mit dem Rotor 3 umlaufenden Behältertaschen 15 ist weiterhin so gewählt, dass der bezogen auf die Maschinenachse MA radiale Abstand zwischen der Behälterabschnittsfläche 16.1 und dem der Maschinenachse MA am nächsten liegenden Teil der Behälterabschnittsfläche 15.1 im oberen Bereich der Behälterabstützeinrichtung 14, d.h. im Bereich des oberen Randes der Behältertaschen 15 und der Behälterführung 16 in etwa gleich dem Bodendurchmesser der Behälter 2a und im unteren Bereich der Behälterabstützeinrichtung 14, d.h. im Bereich des unteren Randes der Behältertaschen 15 und der Behälterführung 16 in etwa gleich dem Bodendurchmesser der Behälter 2b ist.

Durch am Rotor 3 vorgesehene Verstelleinrichtungen 18 sind der Tragring 17 und damit auch die Behältertaschen 15 zur Anpassung der Abstützeinrichtung 14 an unterschiedliche Behältergrößen bzw. an unterschiedliche Behältervolumen höhenverstellbar (Doppelpfeil B). Analog hierzu ist auch die äußere Behälterführung 16 mit am Maschinengestell vorgesehenen Verstelleinrichtungen 19 zur Anpassung an unterschiedliche Behältergrößen und Behälterdurchmesser höhenverstellbar (Doppelpfeil C). Die Verstelleinrichtungen 18 und 19 sind beispielsweise Linearantriebe, z.B. Spindelantriebe.

Näher im Detail umfassen die Verstellelemente 18 bei der dargestellten Ausführungsform jeweils einen beispielsweise elektrischen Verstellmotor 18.1, eine von dem Verstellmotor 18.1 angetriebene und mit ihrer Achse parallel zur Maschinenachse MA angeordnete Gewindespindel 18.2 sowie ein Muttergewindestück 18.3, in welches die Gewindespindel 18.2 eingreift und welches an dem Tragring 17 vorgesehen ist.

Näher im Detail umfassen die Verstellelemente 19 bei der dargestellten Ausführungsform jeweils einen beispielsweise elektrischen Verstellmotor 19.1, eine von dem Verstellmotor 19.1 angetriebene und mit ihrer Achse parallel zur Maschinenachse MA orientierte Gewindespindel 19.2 sowie ein Muttergewindestück 19.3, in welches die Gewindespindel 19.2 eingreift und welches mit der äußeren Behälterführung 16 verbunden ist.

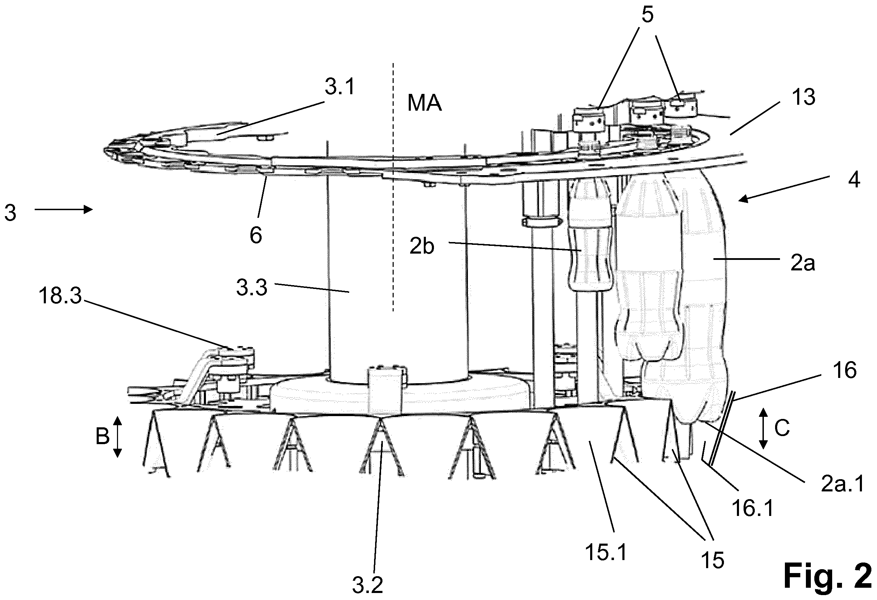

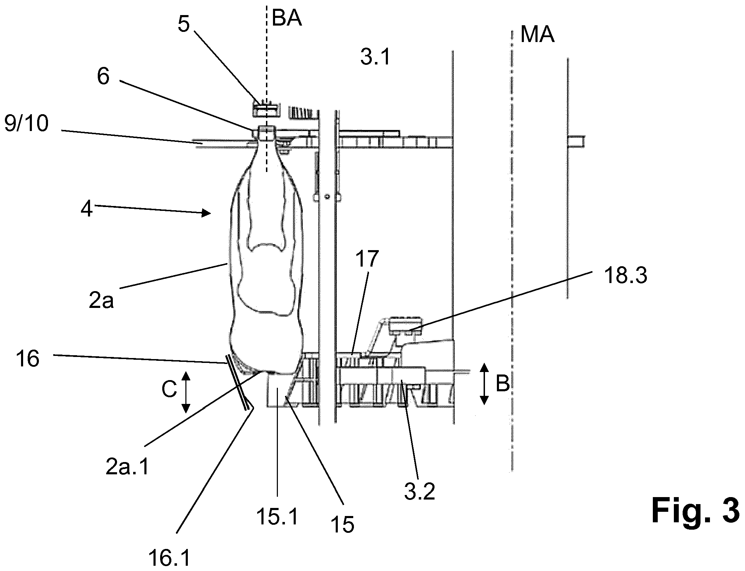

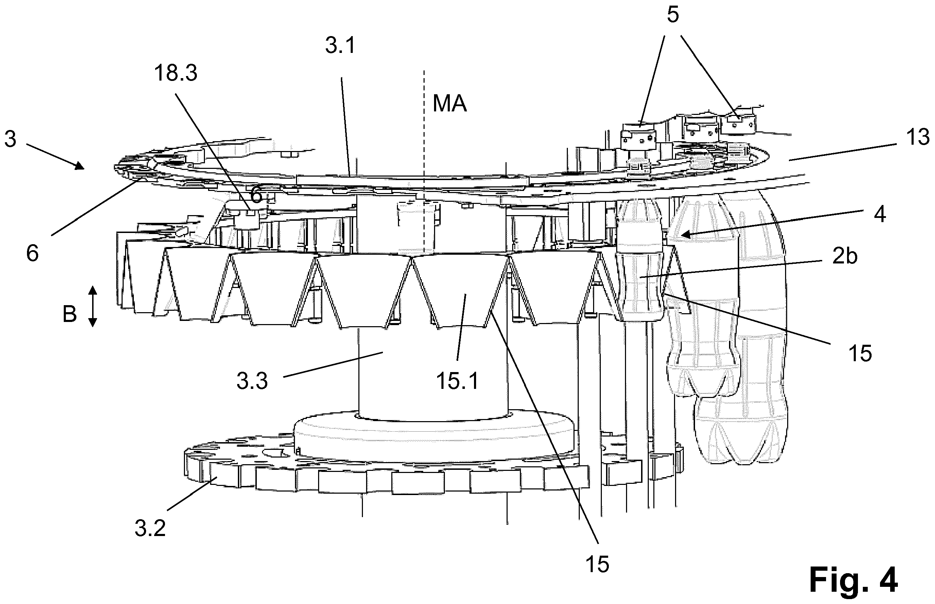

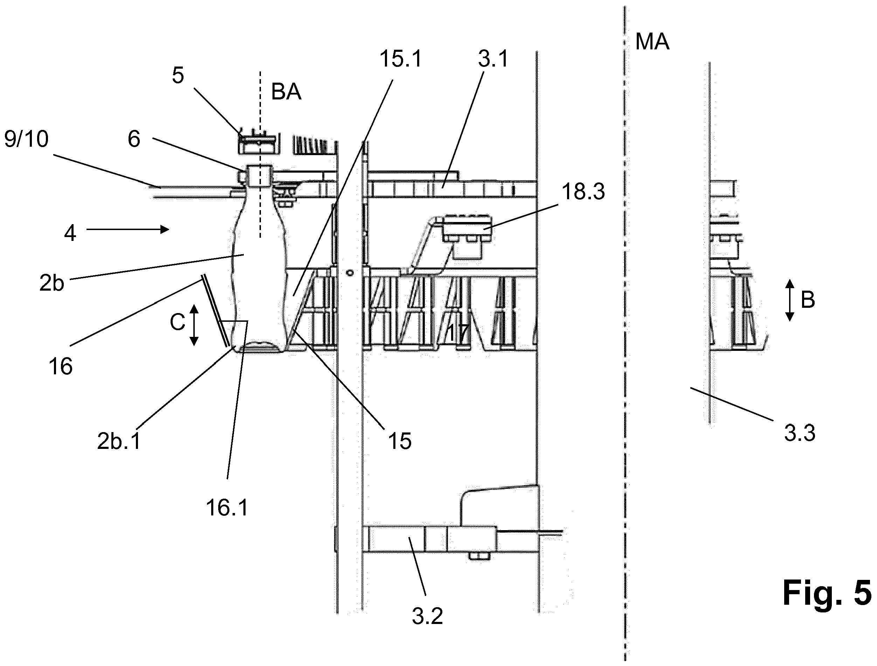

Wie insbesondere die Figuren 2 und 3 zeigen, befinden sich der Tragring 17 mit den Behältertaschen 15 sowie auch die äußere Behälterführung 16 für die Verarbeitung der Behälter 2a in der untersten Verstellposition der Höhenverstellung. Wie Figuren 4 und 5 zeigen, befinden sich der Tragring 17 mit den Behältertaschen 15 und die äußere Behälterführung 16 für die Verarbeitung der Behälter 2b in der obersten Verstellposition der Höhenverstellung. Zur Bearbeitung von Behältern, deren Größe und Behälterdurchmesser zwischen den Behältern 2a und 2b liegt, erfolgt eine entsprechende, vorzugsweise stufenlose Einstellung der Behältertaschen 15 und der äußeren Behälterführung 16 über die Verstelleinrichtungen 18 und 19. In jedem Fall erfolgt die Höhenverstellung so, dass die jeweils zu verarbeitenden Behälter sich in Umfangsrichtung des Rotors 3 zuverlässig in den Behältertaschen 15 und radial zur Maschinenachse MA zuverlässig zwischen der jeweiligen Behältertasche 15 und der äußeren Behälterführung 16 am Behälterboden abstützen.

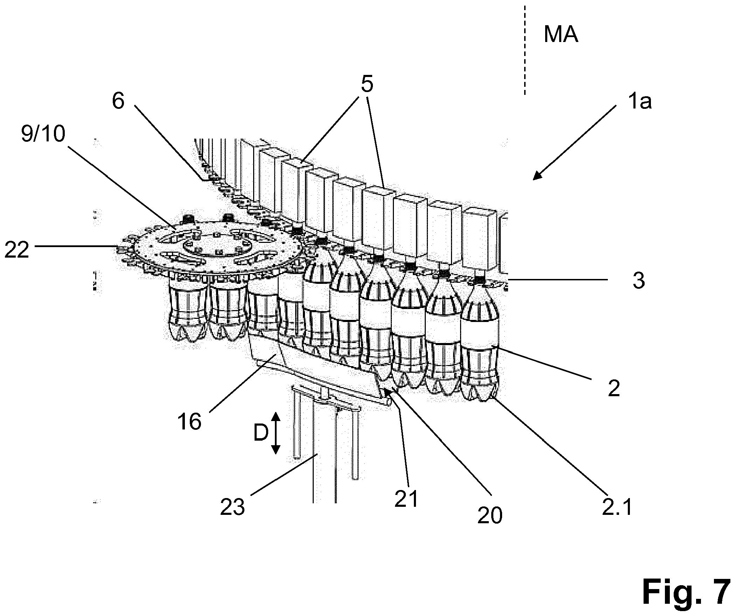

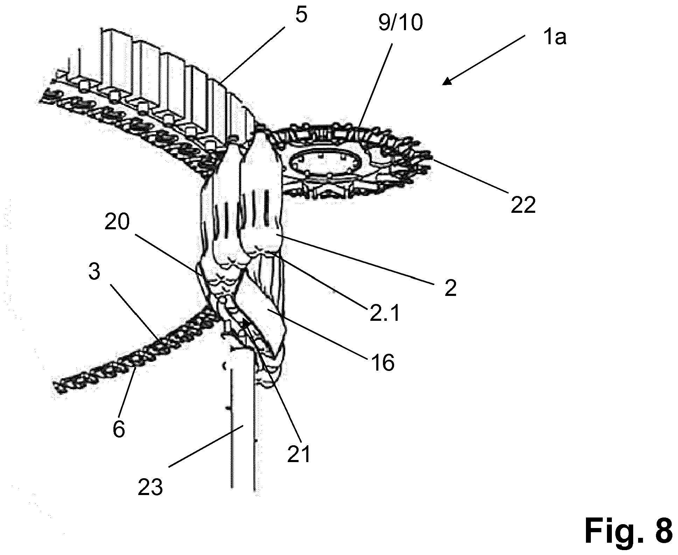

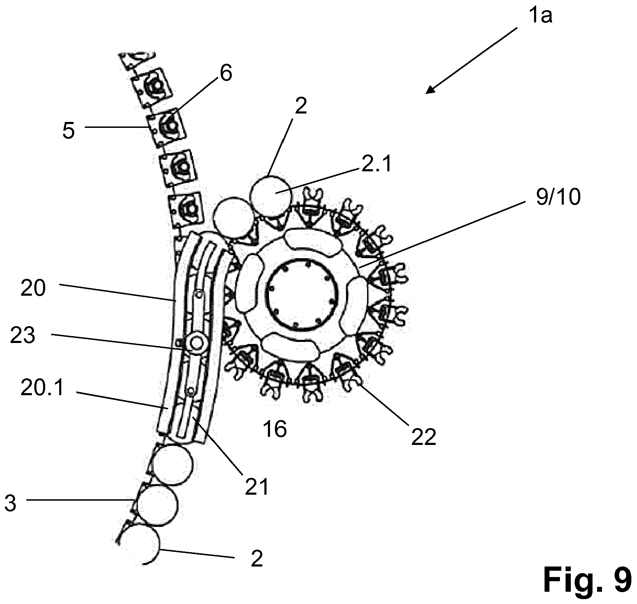

Die Figuren 7 - 9 zeigen als weitere Ausführungsform, welche nicht Teil der Erfindung ist, eine Behälterbehandlungsmaschine 1a, die sich von der Behälterbehandlungsmaschine 1 grundsätzlich nur dadurch unterscheidet, dass anstelle der Behälterabstützeinrichtung 14 eine Abstützeinrichtung 14a vorgesehen ist, die sich bei der in den Figuren dargestellten Ausführungsform lediglich über einen Bereich erstreckt, an dem die Übergabe der Behälter 2 vom Transportstern 9 an die Behandlungspositionen 4 und/oder die Entnahme der Behälter 2 mit dem Transportstern 10 von den Behandlungspositionen 4 erfolgt. Die Behälterabstützeinrichtung 14a, die wiederum zur Führung und Abstützung der hängend am Rotor 3 gehaltenen Behälter 2 an ihrem Behälterboden 2.1 dient, besteht aus der bezogen auf die Maschinenachse MA äußeren Behälterführung 16 und einer bezogen auf die Maschinenachse MA radial innen liegende Behälterführung 20. Beide Behälterführungen 16 und 20 sind so ausgebildet und mit dem Rotor 3 nicht umlaufend angeordnet, dass sie zwischen sich einen rinnenartigen, v-förmigen Führungskanal 21 bilden, der oben und unten offen ist und dessen Breite sich senkrecht zu der Transportrichtung der Behälter 2 mit zunehmendem vertikalen Abstand von der Ebene verengt, auf der sich die Behälterträger 6 bei umlaufendem Rotor 3 bewegen.

Ist die Behälterabstützeinrichtung 14a am Behältereinlauf vorgesehen, so erstreckt sie sich über einen Teilbereich der Transportstrecke der hängend an dem Transportstern 9 gehaltenen Behälter 2, d.h. unterhalb der am Transportstern 9 für die hängende Halterung der Behälter 2 vorgesehenen Behälterträger 22, und zwar über einen kurzen Winkelbereich der Drehbewegung des Transportsternes 9 und anschließend über einen Winkelbereich der Drehbewegung des Rotors 3 unterhalb der dortigen Behälterträger 6. Ist die Behälterabstützeinrichtung 14a am Behälterauslauf, so erstreckt sich der Führungskanal 21 entlang der Bewegungsbahn der Behälter 2 am Rotor 3 vor dem Behälterauslauf, d.h. über einen Winkelbereich der Drehbewegung des Rotors 3 unterhalb der Behälterträger 6 vor dem Behälterauslauf, und dann anschließend über einen Teil der Transportstrecke der Behälter 2 am Transportstern 10, d.h. unterhalb der dortigen Behälterträger 22 über einen Winkelbereich der Drehbewegung des Transportsternes 10.

Die Behälterabstützeinrichtung 14a ist wiederum so ausgebildet, dass die größere Breite, die der Führungskanal 21 senkrecht zur Transportrichtung der Behälter 2 an seiner Oberseite aufweist, gleich oder im Wesentlichen gleich dem Bodendurchmesser der Behälter 2 mit der größten Behältergröße oder dem größten Behälterdurchmesser ist und die Breite, die der Führungskanal 21 senkrecht zur Transportrichtung der Behälter 2 an seiner Unterseite aufweist, gleich oder im Wesentlichen gleich dem Bodendurchmesser der Behälter 2 mit der kleinsten Größe oder dem kleinsten Behälterdurchmesser ist. Durch eine Höhenverstellung, d.h. durch gemeinsames Anheben und Absenken (Doppelpfeil D) der Behälterführungen 16 und 20 mit wenigstens einem Verstellelement 23 ist eine Anpassung an unterschiedliche Behältergrößen und Behälterdurchmesser möglich ist, und zwar derart, dass die Behälter 2 jeweils im Bereich ihres Behälterbodens an den Behälterführungen 16 und 20 geführt sind.

Grundsätzlich besteht auch die Möglichkeit, anstelle der inneren Behälterführung 20 Behälteraschen 15 vorzusehen, die dann in gleicher Weise, wie dies für Behandlungsmaschine 1 beschrieben wurde, am Rotor 3 bzw. an einem dortigen Tragring 17 und mit dem Rotor 3 umlaufend angeordnet sind.

Die Erfindung wurde voranstehend an Ausführungsbeispielen beschrieben. Allen Ausführungen ist gemeinsam, dass die Behälterabstützeinrichtungen 14 bzw. 14a Aufnahmen für die Behälter an ihrem Boden bilden, die (Aufnahmen) sich vertikal nach unten, d.h. mit zunehmendem vertikalem Abstand von den Behandlungsköpfen 5 oder Behälterträgern 6 verengen, und zwar zwischen den Behältertaschen 15 und der äußeren Behälterführung 16 bzw. zwischen den Behälterführungen 16 und 20. Allein durch Höhenverstellung der Abstützeinrichtungen 14 bzw. 14a ist so eine Anpassung an unterschiedliche Behältergrößen und Behälterdurchmesser möglich.

### Bezugszeichenliste

- 1, 1a: Behälterbehandlungsmaschine mit Behältertransportvorrichtung
- 2, 2a, 2b: Behälter
- 2.1, 2a.1, 2b.1: Behälterboden
- 3: Rotor
- 3.1, 3.2: Rotorelement
- 3.3: Säule
- 4: Behandlungsposition
- 5: Behandlungskopf
- 6: Behälterträger
- 7: äußerer Transporteur
- 8: Behältereinlauf
- 9, 10: Transportstern
- 11: Behälterauslauf
- 12: äußerer Transporteur
- 13: Führung
- 14, 14a: Abstützeinrichtung
- 15: Behältertasche
- 15.1: Behälterabschnittsfläche
- 16: äußere Behälterführung
- 16.1: Behälterabstützfläche
- 17: Tragring
- 18, 19: Verstelleinrichtung
- 18.1, 19.1: Verstellmotor
- 18.2, 19.2: Gewindespindel
- 18.3, 19.3: Muttergewindestück
- 20: innere Führung
- 21: Führungskanal
- 22: Behälterträger
- 23: Verstelleinrichtung
- A: Dreh- oder Transportrichtung des Rotors 3
- B, C, D: Höhenverstellung
- BA: Achse der Behandlungsposition 4

## Patentansprüche

1. Behältertransportvorrichtung mit einem um eine vertikale Maschinenachse (MA) umlaufenden Rotor (3), mit mehreren Behälterträgern (6), die um die Maschinenachse (MA) verteilt am Rotor (3) für eine hängende Halterung von Behältern (2, 2a, 2b) vorgesehen sind, mit einer Behälterabstützeinrichtung (14, 14a) zur Abstützung der Behälter (2, 2a, 2b) an ihrer Behälteraußen- oder -mantelfläche im Bereich des Behälterbodens (2.1, 2a.1, 2b.1), wobei die Behälterabstützeinrichtung (14, 14a) mit wenigstens einer äußeren Behälterführung (16) mit Behälterabstützfläche (16.1), die die Maschinenachse (MA) kegelflächenartig umschließt und eine Abstützung der Behälter (2, 2a, 2b) im Bereich ihres Behälterbodens (2.1, 2a.1, 2b.1) an der bezogen auf die Maschinenachse (MA) radial außenliegenden Behälteraußenfläche bewirkt und die zur Anpassung an unterschiedliche Behälterbodendurchmesser höhenverstellbar ist, sowie mit wenigstens einer inneren Behälterabstützfläche (15.1, 20.1) ausgebildet ist, die eine Abstützung der Behälter (2, 2a, 2b) an ihrer bezogen auf die Maschinenachse (MA) radial innen liegenden Behälteraußenfläche bewirkt, wobei wenigstens eine innere Behälterabstützfläche (15.1) mit dem Rotor (3) umlaufend ausgebildet ist, **dadurch gekennzeichnet,**
**dass** die wenigstens eine innere Behälterabstützfläche (15.1, 20.1) der Behälterabstützfläche (16.1) der äußeren Behälterführung (16) bezogen auf die Maschinenachse (MA) für eine Abstützung der Behälter (2, 2a, 2b) im Bereich ihres Behälterbodens (2.1, 2a.1, 2b.1) radial gegenüberliegend angeordnet ist,
**dass** die äußeren und inneren Behälterabstützflächen (16.1; 15.1, 20.1) wenigstens eine sich mit zunehmendem Abstand von den Behälterträgern (6) verengende Aufnahme für die Behälterböden (2.1, 2a.1, 2b.1) bilden, und
**dass** auch die wenigstens eine innere Behälterabstützfläche (15.1, 20.1) zur Anpassung der Behälterabstützeinrichtung (14, 14a) an unterschiedliche Behälterbodendurchmesser höhenverstellbar ist,
**dass** eine Vielzahl von inneren Behälterabstützflächen (15.1) vorgesehen ist und diese von Behältertaschen (15) gebildet sind, die die Behälter (2a, 2b) an ihrem Behälterboden (2a.1, 2b.1) jeweils auf einem Teil ihres Umfangs aufnehmen und bezogen auf die Maschinenachse (MA) radial außen liegend offen sind und dass die Behältertaschen (15) an einem gemeinsamen, vorzugsweise als Tragring (15) ausgebildeten Träger vorgesehen sind, der über wenigstens eine Verstelleinrichtung (18) höhenverstellbar ist.

2. Behältertransportvorrichtung nach Anspruch 1, **dadurch gekennzeichnet**, das jedem Behälterträger (6) eine eigene Behältertasche (15) zugeordnet ist.

3. Behältertransportvorrichtung nach Anspruch 1 oder 2, **dadurch gekennzeichnet, dass** die Behälterabstützflächen (15.1) der Behältertaschen (15) kegel- oder kegelstumpfflächenartig ausgebildet sind.

4. Behältertransportvorrichtung nach einem der vorhergehenden Ansprüche, **dadurch gekennzeichnet, dass** die äußere Behälterführung (16) über wenigstens eine Verstelleinrichtung (19) höhenverstellbar ist.

5. Behältertransportvorrichtung nach einem der vorhergehenden Ansprüche , **dadurch gekennzeichnet, dass** die wenigstens eine Verstelleinrichtung (18, 19, 23) ein Spindelantrieb ist.

6. Behältertransportvorrichtung nach einem der vorhergehenden Ansprüche, **dadurch gekennzeichnet, dass** sie Bestandteil einer Behälterbehandlungsmaschine (1, 1a), beispielsweise einer Füllmaschine zum Füllen der Behälter (2, 2a, 2b) oder einer Verschließmaschine zum Verschließen der Behälter (2, 2a, 2b), oder ein Transportstern ist.

## Claims

1. Container conveyor device comprising a rotor (3) that rotates about a vertical machine axis (MA), with a plurality of container carriers (6) which are provided distributed around the machine axis (MA) on the rotor (3) such that the containers (2, 2a, 2b) are held in a suspended manner, with a container support device (14, 14a) for supporting the containers (2, 2a, 2b) on their container outer or lateral surface in the region of the container base (2.1, 2a.1, 2b.1), wherein the container support device (14, 14a), with at least one outer container guide (16) with a container support surface (16.1), conically encloses the machine axis (MA), and serves to support the containers (2, 2a, 2b) in the region of their container base (2.1, 2a.1, 2b.1) on the container outer surface lying radially outwards relative to the machine axis (MA), and is height-adjustable so as to be adapted to different container base diameters, as well as with at least one inner container support surface (15.1, 20.1), which supports the containers (2, 2a, 2b) on the container outer surface which lies radially inwards relative to the machine axis (MA), wherein at least one inner container support surface (15.1) is configured such as to rotate with the rotor (3), **characterised in that**
the at least one inner container support surface (15.1, 20.1) of the container support surface (16.1) of the outer container guide (16) is arranged radially opposite relative to the machine axis (MA) so as to support the containers (2, 2a, 2b) in the region of their container bases (2.1, 2a.1, 2b.1), that the outer and inner container support surfaces (16.1; 15.1; 20.1) form at least one receiver for the container bases (2.1, 2a.1, 2b.1) which narrows with the increasing distance interval from the container carriers (6), and that also the at least one inner container support surface (15.1, 20.1) is height-adjustable so as to adapt the container support device (14, 14a) to different container base diameters,
that a plurality of inner container support surfaces (15.1) are provided, and that these are formed by container pockets (15), which accommodate the containers (2a, 2b) at their container bases (2a.1, 2b.1) in each case on a part of their circumference and are open, lying radially outwards relative to the machine axis (MA), and that the container pockets (15) are provided on a common carrier, formed preferably as a carrier ring (15), which is height adjustable by means of at least one adjustment device (18).

2. Container conveyor device according to claim 1, **characterised in that** an individual container pocket (15) is allocated to each container carrier (6).

3. Container conveyor device according to claim 1 or 2, **characterised in that** the container support surfaces (15.1) of the container pockets (15) are configured in the shape of a cone or a truncated cone.

4. Container conveyor device according to any one of the preceding claims, **characterised in that** the outer container guide (16) is height adjustable by means of at least one adjustment device (19).

5. Container conveyor device according to any one of the preceding claims, **characterised in that** the at least one adjustment device (18, 19, 23) is a spindle drive.

6. Container conveyor device according to any one of the preceding claims, **characterised in that** it is a component part of a container treatment machine (1, 1a), for example of a filling machine for filling the containers (2, 2a, 2b) or of a closing machine for closing the containers (2, 2a, 2b) or a conveying or transport star.

## Revendications

1. Dispositif de transport de récipients avec un rotor (3) tournant autour d'un axe de machine vertical (MA), avec plusieurs porte-récipient (6), qui sont prévus répartis autour de l'axe de machine (MA) sur le rotor (3) pour une fixation suspendue de récipients (2, 2a, 2b), avec un dispositif de soutien de récipient (14, 14a) pour le soutien des récipients (2, 2a, 2b) au niveau de leur surface extérieure ou de leur surface d'enveloppe de récipient dans la zone du fond de récipient (2.1, 2a.1, 2b.1), dans lequel le dispositif de soutien de récipient (14, 14a) est réalisé avec au moins un guide-récipient (16) extérieur avec surface de soutien de récipient (16.1), qui entoure l'axe de machine (MA) à la manière d'une surface conique et entraîne un soutien des récipients (2, 2a, 2b) dans la zone de leur fond de récipient (2.1, 2a.1, 2b.1) au niveau de la surface extérieure de récipient se trouvant radialement à l'extérieur par rapport à l'axe de machine (MA) et qui est réglable en hauteur pour l'adaptation à différents diamètres de fond de récipient, ainsi qu'avec au moins une surface de soutien de récipient (15.1, 20.1) intérieure, qui entraîne un soutien des récipients (2, 2a, 2b) au niveau de leur surface extérieure de récipient se trouvant radialement à l'intérieur par rapport à l'axe de machine (MA), dans lequel au moins une surface de soutien de récipient (15.1) intérieure est réalisée tournant avec le rotor (3),
**caractérisé en ce**
**que** l'au moins une surface de soutien de récipient (15.1, 20.1) intérieure de la surface de soutien de récipient (16.1) du guide-récipient extérieur (16) est agencée radialement opposée par rapport à l'axe de machine (MA) pour un soutien des récipients (2, 2a, 2b) dans la zone de leur fond de récipient (2.1, 2a.1, 2b.1),
**que** les surfaces de soutien de récipient (16.1 ; 15.1, 20.1) extérieure et intérieure forment au moins un logement, se rétrécissant avec l'augmentation de la distance des porte-récipient (6), pour les fonds de récipient (2.1, 2a.1, 2b.1), et
**que** l'au moins une surface de soutien de récipient (15.1, 20.1) intérieure est également réglable en hauteur pour l'adaptation du dispositif de soutien de récipient (14, 14a) à différents diamètres de fond de récipient,
**qu'**une pluralité de surfaces de soutien de récipient (15.1) intérieures est prévue et celles-ci sont formées par des poches de récipient (15), qui reçoivent les récipients (2a, 2b) au niveau de leur fond de récipient (2a.1, 2b.1) respectivement sur une partie de leur circonférence et sont ouvertes radialement à l'extérieur par rapport à l'axe de machine (MA) et
**que** les poches de récipient (15) sont prévues au niveau d'un support commun, réalisé de préférence en tant qu'anneau porteur (15), qui est réglable en hauteur par le biais d'au moins un dispositif de réglage (18).

2. Dispositif de transport de récipients selon la revendication 1, **caractérisé en ce qu'**une propre poche de récipient (15) est associée à chaque porte-récipient (6).

3. Dispositif de transport de récipients selon la revendication 1 ou 2, **caractérisé en ce que** les surfaces de soutien de récipient (15.1) des poches de récipient (15) sont réalisées à la manière d'une surface conique ou tronconique.

4. Dispositif de transport de récipients selon l'une quelconque des revendications précédentes, **caractérisé en ce que** le guide-récipient (16) extérieur est réglable en hauteur par le biais d'au moins un dispositif de réglage (19).

5. Dispositif de transport de récipients selon l'une quelconque des revendications précédentes, **caractérisé en ce que** l'au moins un dispositif de réglage (18, 19, 23) est un entraînement de broche.

6. Dispositif de transport de récipients selon l'une quelconque des revendications précédentes, **caractérisé en ce qu'**il fait partie d'une machine de traitement de récipients (1, 1a), par exemple une machine de remplissage pour le remplissage des récipients (2, 2a, 2b) ou d'une machine de bouchage pour le bouchage des récipients (2, 2a, 2b), ou une étoile de transport.
